# EUROPEAN PATENT SPECIFICATION

(11) **EP 2 230 970 B1**
(45) Date of publication and mention of the grant of the patent: **08.04.2015**
(21) Application number: 08865865.3
(22) Date of filing: 19.12.2008
(51) Int. Cl.: A47C 27/18, A47C 27/08, A47C 4/54, A47C 7/02, B60N 2/66, B60N 2/44

(54) **Reclinable chair with self-inflating devices**
Neigungsverstellbarer Stuhl mit Selbstaufblasenden Vorrichtungen
Chaise inclinable avec dispositifs autogonflants

(30) Priority: 20.12.2007 AU 2007907035; 18.02.2008 AU 2008900820
(43) Date of publication of application: 29.09.2010
(73) Proprietor: Comfort Concepts Pty Limited, Villawood, New South Wales 2163 (AU)
(72) Inventor: WORNELL, David, Austral New South Wales 2179 (AU); LEE, Ralph Edward, Ingleburn New South Wales 2565 (AU)
(74) Representative: Holme Patent A/S
(86) International application number: PCT/AU2008/001876
(87) International publication number: WO 2009/079696

(56) References cited:
- WO-A1-02/32272
- WO-A1-02/32272
- WO-A1-97/19622
- WO-A1-99/51899
- CA-A1- 2 144 903
- DE-A1-102004 008 407
- US-A- 5 617 595
- US-A1- 2006 040 803

## Description

### TECHNICAL FIELD

This invention relates to reclinable chairs with seating systems that provide personalised postural support and which may be readily adjusted to satisfy individual body shapes and needs. The seating systems incorporate self-inflating devices and valves which allow air to enter or escape from said self-inflating devices which mould exactly to individual body shapes.

### BACKGROUND ART

Many people suffer from low back pain and require some form of postural support to help alleviate the discomfort they endure. Incorrectly designed seating will cause healthy people to slide down in a seat and rotate their pelvis backwards, causing pressure on the lower spine. The problem is exacerbated by sedentary lifestyles and people with poor trunk control or who readily fatigue, will succumb more easily to gravitational forces and bad posture.

There are prior art seats featuring different back rest profiles, the majority of which are aimed at providing an S-shaped spine profile in order to achieve support of the lower lumbar area. However, these seats do not provide any support of the pelvic area and therefore allow incorrect positioning of the pelvis in relation to the spine and makes such seats ineffective in providing true good posture.

It is known to have a seat design which attempts to support the pelvis but this is done by crude methods such as a projection extending.from the lower part of the back rest that pushes upon the upper part of the pelvis to provide correct positioning of the pelvis. This method can create extreme discomfort because of the distancing of the user's back from the back rest does not provide support of the lower lumbar area. Another method is to have a flat seat bottom which tilts forward in order to obtain the correct position of the pelvis. However, this does not allow for comfortable sitting and urges the user's back away from the back rest.

The prior art includes a prior art seat ("Powell Seat")which provides support to the pelvis while also allowing support of the lower back. In this prior art seat there is provided a seat comprising a seat bottom and a seat back rest which can extend substantially upright relative to the seat bottom; the seat bottom having a dished gluteal portion for receiving the user's buttocks and a raised front portion for tending to retain the user in the dished gluteal portion; the seat back rest having two lower sections, the first lower section positioned relative to the seat bottom to contact the posterior superior spine of the ilia while the user is seated and the second lower section positioned below the first lower section and part of a substantially concave lower portion of the seat back rest to support the upper and middle gluteal; the first lower section of the seat back rest and the lowest point of the dished gluteal portion are spaced relative to each other so as to have a specific Z-line dimension when in use corresponding to the average dimension between the posterior superior spine of the ilia and the ischial tuberosities of an adult person, and the concave lower portion of the seat back rest and the dished gluteal portion of the seat bottom being relatively positioned, whereby the two lower sections of the back rest and a lower section of the seat bottom around the lowest point of the dished gluteal portion are able to simultaneously support the user's pelvis in a correct physiological sitting position for normal spinal integrity substantially corresponding to the pelvic standing position.

The Powell Seat allows the user to adopt a seated position in which the sacrolliac joint, the buttocks and the lower back muscles are effectively supported allowing for comfort and the ability to be relaxed over extended periods. This is distinct from other seating designs that attempt to provide back support with a definite lumbar only support mechanism or seating, to provide pelvic positioning without back support by angled seat bottom or by projections from the back rest to cause the user to sit with their pelvis in a correct position.

The Powell Seat enables each individual to assume a position that is the most comfortable, stable and energy conserving postural position. It provides for relaxation of spinal muscles, from the pelvis through the lumbar, thoracic and cervical regions. The angle and contours, of the ischial-buttock support and the rear back support, prevents a forward slide of the ischia and back slump of the iliac crests.

However, there are problems associated with the Powell Seat, in particular, it is unable to be reclined as the Z dimension would change and result In the loss of pelvic and postural support.

International patent publication number WO 02/32272 describes a chair having a seat and/or back rest filed with an elastic padding material, which can be expanded in size, as it is accommodated inside an air-tight enclosure that has an opening that can be closed.

International patent application number WO 99/51899 describes a self-inflating device with a compressible material contained in an envelope and having valve means adapted to allow air in and out of the envelope so that the compressible material can expand/reduce in size.

The dimensions and shape of a seat are crucial for promoting suitable posture and appropriate support and It Is the object of the invention, therefore, to create a seating system that achieves, at least some, of the following objectives:
- provide a seat that enable the Z dimension of the Powell Seat to be maintained when the back rest is reclined.
- Stabilise the pelvis in the correct position at all times and prevent gravity induced slouching.
- Accommodate fixed postural changes within the seat.
- Reduce the occurrence of postural changes.
- Assist energy management.
- Maximise pressure distribution by providing support to the maximum surface area of the body.
- Accommodate the ischial tuberosities and support the thighs.
- Provide maximum stability.
- Promote a symmetrical and well balanced position.
- Reduce friction and shearing forces.
- Increase comfort.

### DISCLOSURE OF INVENTION

According to an example not part of the invention, there is provided a chair comprising a seat back and seat bottom which incorporates at least one self inflating device in the seat bottom, the self inflating device comprising:
an envelope defining a closed space,
a compressible material contained within the envelope, and
valve means adapted to allow air into the envelope so that the compressed material can expand to enlarge the self-inflating device and to allow air out of the envelope so that the material may be compressed and the self-inflating device reduced in size,
wherein the seat bottom moulds to the exact shape of the body, holding the buttocks in place and wherein the pelvis is tilted forward so that the spine is lengthened in a gentle S-shape.

According to the invention there is provided a reclinable chair as claimed in claim 1.

The control valve is controlled by a single controller.

Preferably, the valve seal of the control valve is partially opened when the button is partially depressed, locked into an open position when the button is fully depressed, and when the valve seal is locked into an open position and the button fully depressed, locks the valve seal and thereby the control valve, in a closed position.

The single controller may be a lever.

Preferably, the valve seal of the control valve is partially opened when the lever is partially raised, locked into an open position when the lever is fully raised, and when the valve seal is locked into an open position and the lever fully raised, locks the valve seal in a closed position.

In a preferred form of the invention, the seat with the at least two self-inflatable devices each with its own single controller to control the inflation and deflation of the self-inflatable device, has the at least two single controllers collocated adjacently to facilitate easy access and control of the at least two self inflatable devices. Preferably, at least two single controllers are collocated on a control panel.

The valve means may include a bleed valve adapted to bleed air into the envelope such that when the seat incorporating the at least one inflatable device is not in use, the envelope returns to a fully inflated state. The valve means may include separate bleed valves and control valves for each self inflating device.

Preferably, at least two separate bleed valves and at least two separate control valves are collocated on a control panel remote to the self inflating devices.

The control valve may be a mechanical control valve operated manually by a single controller or an electric control valve comprising a solenoid valve and switching means.

The bleed valve may be a mechanical bleed valve operated manually by a single controller or automatically controlled by pressure differences resulting from the seat becoming unoccupied.

The bleed valve may be an electric bleed valve which comprises a solenoid valve, and switching means comprising a user operable switch and a relay system which operates automatically to open the solenoid valve for a predetermined time.

According to an example not part of the invention there is provided a seat adapted for use in a vehicle comprising a seat bottom and a seat back, the seat incorporating at least one self-inflating device inserted into either the seat bottom and/or the seat back of the vehicle seat, the self-inflatable device comprising:
an envelope defining a closed space;
a compressible material contained within the envelope; and;
electrically operated valve means adapted to allow air into the envelope so that the compressed material can expand to enlarge the self-inflating device and to allow air out of the envelope so that the material may be compressed and the self-inflating device reduced in size;
and wherein the occupant of the seat can adjust the degree of compression of the at least one self inflating device in the seat bottom such that it moulds to the exact shape of the body, holding the buttocks in place and urging the pelvis forward so that the spine is lengthened in a gentle S-shape.

According to an example not part of the invention there is provided a reclinable seat adapted for use in a vehicle comprising a seat bottom and a reclinable seat back rest, the seat incorporating at least one self-inflating device inserted into each of the seat bottom and seat back rest of the reclinable seat, with each of the at least one self-inflatable devices comprising:
an envelope defining a closed space;
a compressible material contained within the envelope; and;
electrically operated valve means adapted to allow air into the envelope so that the compressed material can expand to enlarge the self-inflating device and to allow air out of the envelope so that the material may be compressed and the self-inflating device reduced in size;
and wherein the occupant of the seat can adjust the recline of the seat and the degree of compression of the at least one self inflating device of the seat bottom and seat back rest, such that the seat moulds to the exact shape of the body, provides individual pelvic support, holds the buttocks in place and tilts the pelvis forward so that the spine is lengthened in a gentle S-shape.

The seat may be: a car seat; an aircraft seat; a train seat; a truck seat, a van seat, a tractor seat, a bulldozer seat, a crane seat or an excavator seat.

Preferably, the vehicle is a vehicle possessing an electrically operated central locking system and/or ignition system switch.

The electrically operated valve means may comprise at least one electric control valve adapted to control the degree of compression of the at least one self inflating device and at least one electric bleed valve capable of bleeding air into the at least one self inflating device allowing it to fully reinflate when the vehicle is centrally locked or when the ignition system is switched off.

The electric control valve and electric bleed valve may comprise individual electric solenoid valves controlled independently.

Preferably, the electric control valve is briefly opened when the pressure control switch is momentarily closed, and fully opened when the pressure control switch is held in the closed position, and fully closed when the pressure control switch is in the open position.

The electric bleed valve may be controlled by the operation of the vehicle's central locking and/or ignition system, a time delay relay and an override switch, wherein when the override switch is in the closed position and the vehicle is centrally locked (and/or the ignition system is switched off) an electric current is supplied to the electric bleed valve, opening it fully, and to the time delay relay unit which maintains the circuit and keeps the electric current flowing to the electric bleed valve for a predetermined time upon the expiry of which the circuit is opened and the electric bleed valve is deenergised and closed, the result of which is that the at least one self inflating device in the seat re-inflates to its fully expanded state when the vehicle is centrally locked and/or the ignition is switched off, and wherein the opening of the override switch prevents current flowing to the the electric bleed valve when the central locking system of the vehicle is engaged, thereby keeping it closed and thus when the vehicle is centrally locked and/or the ignition system is switched off the at least one self inflating device in the seat will retain its compressed shape.

The valve means may include a combined electrical valve capable of controlling the degree of compression of the at least one self inflating device and bleeding air into the at least one self-inflatable device.

The combined electric solenoid valve may be controlled by the operation of the pressure control switch wherein the combined electric solenoid valve is briefly opened when the pressure control switch is momentarily closed and fully opened when the pressure control switch is held in the closed position and fully closed when the pressure control switch is in the open position.

The combined electric solenoid valve may be controlled by the operation of the vehicle's central locking system (or ignition system), a time delay relay and an override switch, wherein when the override switch is in the closed position and the vehicle is centrally locked (or the ignition system is switched off) an electric current is supplied to the combined electric solenoid valve opening it fully and to the time delay unit which maintains the circuit and keeps the electric current flowing to the combined electric solenoid valve for a predetermined time upon the expiry of which the circuit is opened and the combined electric solenoid valve is de-energised and closed, the result of which is that the at least one self inflating device in the seat bottom re-inflates to its fully expanded state when the vehicle is centrally locked or the ignition system is switched off, and where the operation of the override switch will open the circuit to the combined electric solenoid valve whereupon the combined electric solenoid valve will remain closed when the vehicle is centrally locked or the ignition system is switched off and the at least one self inflating device in the seat bottom will retain its compressed shape.

According to a further example not part of the invention there is provided a method for forming a seat bottom incorporating at least one self-inflating device that further comprises a foam filled bladder and control valve the method comprising the steps of:
determining the shape, size and thickness of the foam filled bladder of the least one self inflating device to be inserted into the seat bottom;
making a mould insert of a suitable material to the shape and size of the foam filled bladder determined in the previous step;
fitting the mould insert to the inside of the lid of the injection moulded foam mould for the seat foam cushion;
injecting the mould for the seat foam cushion with substrate and producing a moulded foam seat cushion that has a cavity accessible from the underside of the seat cushion and which is formed to the shape and size of the foam filled bladders;
fitting the foam filled bladder into the cavity with a port in the foam filled bladder positioned to correspond to a hole bored in the side of the injection moulded foam seat cushion;
connecting the control valve to the port in the foam filled bladder through the hole;
upholstering the seat bottom.

According to a still further example not part of the invention there is provided a further method for forming a seat bottom incorporating at least one self-inflating device that further comprises a foam filled bladder and control valve the method comprising the steps of:
determining the shape, size and thickness of the foam filled bladder of the self-inflating device to be inserted into the seat bottom;
attaching the foam filled bladder to a plywood portion of the seat bottom base;
determining the position and connecting the control valve to the port in the foam filled bladder;
covering the perimeter of the foam filled bladder with foam cut to size;
covering the top side of the foam filled bladder and its foam surround with a further layer of foam approximately 10mm in thickness;
upholstering the seat bottom.

According to a further aspect of the invention there is provided a method for forming a seat back rest incorporating a self-inflating device that further comprises a foam filled bladder and control valve the method comprising the steps of:
determining the shape, size and thickness of the foam filled bladder of the self-inflating device to be inserted into the back rest of the seat;
making a mould insert of a suitable material to the shape and size of the foam filled bladder determined in the previous step;
fitting the mould insert to the inside of the lid of the injection moulded foam mould for the seat back rest foam cushion;
injecting the mould for the seat back rest foam cushion with substrate and producing a moulded foam seat back rest cushion that has a cavity accessible from the rear of the seat back rest cushion and which is formed to the shape and size of the foam filled bladder;
fitting the foam filled bladder into the cavity with a port in the foam filled bladder positioned to correspond to a hole bored in the side of the injection moulded foam seat back rest cushion;
connecting the control valve to the port of the foam filled bladder through the hole;
upholstering the seat back rest.

According to a further example not part of the invention there is provided a further method for forming a seat back rest incorporating a self-inflating device that further comprises a foam filled bladder and control valve the method comprising the steps of:
determining the shape, size and thickness of the foam filed bladder of the self-inflating device to be inserted into the back rest of the seat;
attaching the foam filled bladder to a plywood portion of the seat back rest;
determining the position and connecting the control valve to the port of the foam filled bladder;
covering the perimeter of the foam filled bladder with foam cut to size;
covering the top side (front) of the foam filled bladder and its foam surround with a further layer of foam approximately 10mm in thickness;
upholstering the seat back rest.

According to a further example not part of the invention there is provided a mechanical control valve comprising:
button and hollow button shaft for communicating the operative motion of the valve user, and wherein the button shaft features three short equally spaced keys running vertically along the outside of the shaft and serrations at its lower end and wherein the button and button shaft are attached together by two clasps and slots;
snap ring which snaps into place over a top valve cylinder and grips the fabric adjacent the top valve cylinder;
button spring which holds the button flush with the top of the snap ring;
top valve cylinder which is an open cylinder the inside surface of which features three deep, equally spaced keyways interspaced with three shallow keyways, which at the lower ends of the keyways, the material formed between the keyways is sloped to create a cam ratchet which operates in conjunction with the serrations on the lower end of the button shaft and keys on a valve stem;
O ring which sits against the lower face of the top valve cylinder and provides the seal between the valve stem, the top valve cylinder and a valve cylinder bottom;
valve stem possessing a central shaft featuring three equally spaced keys, the top ends of which are bevelled at 45 degrees, and which slides inside the button shaft until the keys abut the serrated end of the button shaft and the keys of the valve stem slide along the three deep keyways and the keys of the button shaft slide along the three shallow keyways in the top valve cylinder, and where the lower end of the valve stem is conically shaped with spacers to allow air flow and possess a recess on its lower end for maintaining a valve spring;
valve spring for urging the valve stem upwardly such that it abuts the O ring when the valve is closed and against the ends of the three shallow keyways in the top valve cylinder when opened;
bottom valve cylinder comprising a short open cylinder of a diameter less than the valve spring connected to an open cylinder of larger diameter and wherein the end with the larger diameter is adapted to be connected to the lower end of the top valve cylinder;
wherein when the button is slightly depressed the button spring becomes compressed and the button shaft extends down along the shallow keyways and pushes the valve stem against the valve spring and away from the O ring;
and wherein if the button is fully depressed, the keys on the valve stem are pushed clear of the deep keyways in the top valve cylinder whereupon the serrations on the lower end of the button shaft press against the bevelled ends of the keys on the valve stem and, by forcing them into the bottom of the serrations, cause the valve stem to partially rotate, and when the button is released from being fully depressed, the valve spring pushes against the valve stem which is further rotated as the bevelled ends of the keys engage cam ratchets on the inside of the cylindrical surface of the top valve cylinder, and where the valve stem rotates to a position where the keys on the valve stem are aligned with the shallow keyways in the top valve cylinder whereupon the mechanical control valve is held fully open; and
wherein when the next time the button is fully depressed, the serrations on the lower end of the button shaft press against the bevelled ends of the keys on the valve stem and, by forcing them into the bottom of the serrations, cause the valve stem to partially rotate, and wherein when the button is released, the valve spring pushes against the valve stem which is further rotated as the bevelled ends of the keys engage the cam ratchet on the inside of the top valve cylinder's surface, and where the valve stem is then rotated to a position where the keys of the valve stem are aligned with the deep keyways in the top valve cylinder, and which then slot into the deep keyways and the valve stem is pressed against the O ring where the mechanical control valve is maintained in a closed position.

According to a further example not part of the invention there is provided an automatic mechanical bleed valve for incorporation into a self inflating device, the automatic mechanical bleed valve comprising:
flange adapted to be welded to the foam filled bladder of the self inflaming device;
outer valve case which is adapted to be attached to the flange, and further comprising four equally spaced keyways in the inside face of the outer valve case, extending vertically from the flange and further comprising at least one air port;
inner valve case comprising four equally spaced keys positioned on the outer side of the inner valve case and which correspond to the keyways of the outer valve case, and further, which is adapted to be attached to a valve seal;
valve spring is positioned between the flange and the inner valve case,
wherein when there is no external pressure on the self-inflating device the valve spring gently pushes the inner valve case up and the keys travel along the keyways thereby opening the seal slightly which allows air to pass into the self-inflating device via the air ports in the outer valve case,
and wherein when there is external pressure on the self-inflating device the pressure is transmitted onto the inner valve case causing the inner valve case to compress the valve spring and close the seal whereupon air is prevented from leaving or entering the self inflating device.

### BRIEF DESCRIPTION OF THE DRAWINGS

Fig. 1 is front view of a prior art chair;
Fig. 2 depicts the upper surface of the chair taken along the cross section A-A of Fig. 1;
Fig. 3 is a partial cutaway perspective view of a seat bottom according to a first embodiment of the invention;
Fig. 4 is a partial cutaway view of a seat bottom according to a second embodiment of the invention;
Fig. 5 is a partial cutaway view of a seat bottom according to a third embodiment of the invention;
Fig. 6 is a perspective view of a chair according to a fourth embodiment of the invention;
Fig. 7 is a perspective view of a chair according to a fifth embodiment of the invention;
Fig. 8 is a perspective view of a chair according to the invention;
Fig. 9 is a perspective view of a chair according to a seventh embodiment of the invention;
Fig. 10 is a partial cutaway side view of a seat bottom of the seventh embodiment of the invention;
Fig. 11 is a perspective view of a chair according to an eighth embodiment of the invention;
Fig. 12 is a perspective view of a chair according to a ninth embodiment of the invention;
Fig. 13 is a perspective view of a chair according to a tenth embodiment of the invention;
Fig. 14 is a perspective view of a chair according to an eleventh embodiment of the invention;
Fig. 15 is a perspective view of a chair according to a twelfth embodiment of the invention;
Fig. 16 is an exploded view of a mechanical control valve according to a further aspect of the invention;
Fig. 17 is a top sectional view of a mechanical control valve depicted in an open state with the button depressed along H-H axis of Fig. 19;
Fig. 18 is a side view of a mechanical control valve depicted in an open state with the button depressed;
Fig. 19 is a side sectional view of a mechanical control valve depicted in an open state with the button depressed taken along the A-A axis of Fig. 18;
Fig. 20 is a side sectional view of a mechanical control valve depicted in an open state with the button depressed taken along the E-E axis of Fig. 19;
Fig. 21 is a top sectional view taken along axis H-H of Fig. 23 of a mechanical control valve depicted in a closed state;
Fig. 22 is a side view of a mechanical control valve depicted in a closed state;
Fig. 23 is a side sectional view of a mechanical control valve depicted in a closed state taken along the A-A axis of Fig. 22;
Fig. 24 is a side sectional view of a mechanical control valve depicted in a closed state taken along the E-E axis of Fig. 23;
Fig. 25 is a side sectional view of a seat bottom cushion incorporating an automatic mechanical bleed valve;
Fig. 26 is a schematic depicting the components and circuits of the electrical inflation control aspect of the overall vehicular pressure control system for seats incorporating self inflating devices; and
Fig. 27 is a schematic depicting the components and circuits of an electrical bleed aspect of the overall vehicular pressure control system for seats incorporating self inflating devices.

### MODES FOR CARRYING OUT THE INVENTION

The relationship of the seat bottom and seat back rest and the shape of the seat back rest of seats are crucial in determining correct support for the human body and are determined by the characteristics of the materials used in the manufacture of the seat. What has been determined to be of great importance is the relationship between the seat bottom support and the sacroiliac support of the rear seat back rest member and the posterolateral support of the sacroiliac region of the upper pelvis.

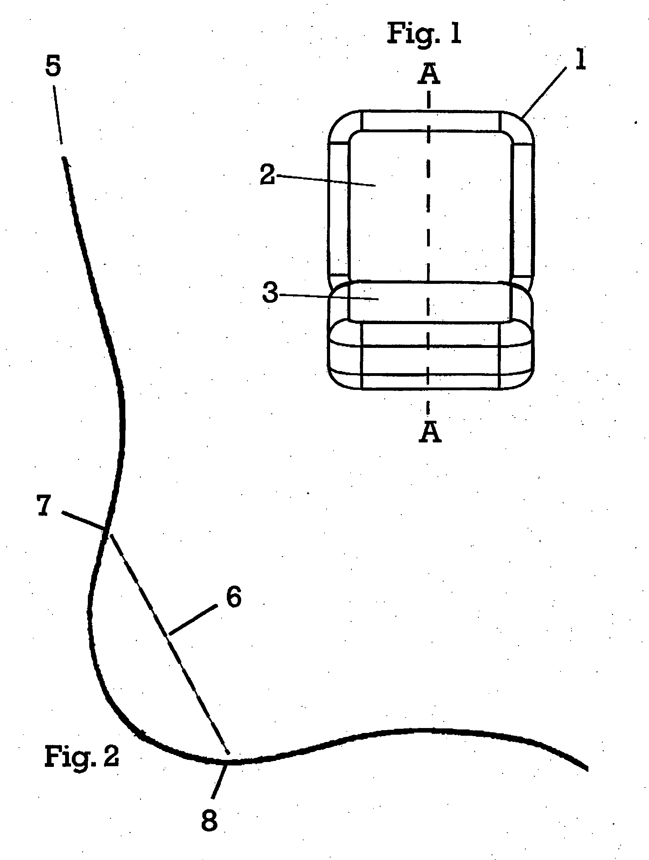

Depicted in Fig. 1 is a prior art chair 1 comprising back rest 2 and seat bottom 3. The surface contour 5 of the chair 1, taken along the axis A-A 4 of Fig. 1 are depicted in Fig. 2. It has been demonstrated that in order to provide good pelvic and lumbar support, and to achieve a gentle S-shaped curvature of the spine chairs should have a shape similar to that depicted in Fig. 1. Further, it has been demonstrated that the Z dimension 6 of the chair which is the distance between the lowest point of the seat bottom 7 and the junction 8 of the concave and convex portions of the seat back, should be approximately 230mm to accommodate the anatomy of an average sized adult.

The present invention provides a reclinable chair that maintains the general shape of the surface contour 5 and relatively constant Z dimension 6 through the use of self inflatable devices in seat backs and seat bottoms. The self inflatable devices are precisely controlled through the operation of valves (both manual and/or electric) for the movement of air into and out of the devices. The valves utilised may be control valves or bleed valves.

Control valves are designed to control the amount of air contained in a self-inflating device. Control valves may be mechanically operated or electrically (solenoid) operated. Control valves may be fully closed, fully opened or partially opened. Self-inflating devices may be partially compressed to allow seat bottom or seat back rest to mould exactly to the body shape by partially opening the control valve. Self-inflating devices may be fully compressed by fully opening the control valve when the seat is occupied. Self-inflating devices may be fully decompressed to allow seat bottom or seat back rest to return to its original shape by fully opening the control valve when the seat is unoccupied.

By incorporating control valves into self inflating devices that are fitted to the back rest and seat bottom of a seat that is able to recline, the user of the seat is able to adjust the angle of recline first before adjusting the degree of compression of the self inflating devices incorporated into the seat, thereby allowing the user to achieve the desired orientation of the pelvis and S-shaped curvature of the spine necessary for maintaining good health.

Mechanical control valves may be fitted: (a) In situ to the foam filled bladder of the self-inflating device; OR (b) In a position that is remote from the foam filled bladder of the self-inflating device BUT is integral to the seat and connected to the foam filled bladder of the self-inflating device via a rigid or flexible tube, OR (c) In a position that is remote from the seat and connected to the foam filled bladder of the self-inflating device via a flexible tube.

Mechanical control valves that are fitted in situ to the foam filled bladder of the self-inflating device may be operated by: (a) manually pushing the button and controlling the valve with a finger, or operating and controlling the valve with a lever, directly or via an actuator rod.

Mechanical control valves that are located in a position remote to the foam filled bladder of the self-inflating device BUT are an integral to the seat may be operated by: (a) manually pushing the button and controlling the valve with a finger, or (b) operating the button and controlling the valve with a lever attached to the valve.

Mechanical control valves that are located in a position remote to the seat may be operated by manually pushing the button and controlling the valve with a finger.

Electrical control valves may be fitted in situ to the foam filled bladder of the self-inflating device or may be connected to the foam filled bladder of the self-inflating device by a flexible tube and operated by a remote toggle or pushbutton switch.

As seating will often be personal, such as an office seat or a van driver's seat, and it may be desirable for those seats to retain the shapes and settings for the regular user. In other types of seating, including passenger seating, it is likely that an automatic re-inflation capability will be required.

Re-inflation may be achieved by fully opening the control valve after the seat is vacated and allowing the seat bottom to return to its original shape. Alternatively, re-inflation may be achieved using bleed valves that allow air to flow into the foam filled bladder of the self inflating device and return the seat bottom to its original shape. Bleed valves may be mechanically operated or electrically (solenoid) operated (hereafter referred to as mechanical bleed valves and electrical bleed valves respectively).

Mechanical bleed valves may be fitted: (a) In situ to the self-inflating device (envelope/bladder); OR (b) In a position that is remote from the self-inflating device BUT is integral to the seat and connected to the self-inflating device via a rigid or flexible tube, OR (c) in a position that is remote from the seat and connected to the self-inflating device via a flexible tube.

Mechanical bleed valves that are fitted in situ to the self-inflating device will usually be operated automatically after the seat has been vacated.

Mechanical bleed valves that are located in a position remote to the foam filled bladder of the self-inflating device BUT are an integral to the seat may be operated by manually opening the valve after the seat is vacated.

Mechanical bleed valves that are located in a position remote to the seat may be operated by manually opening the valve after the seat is vacated.

Automatic mechanical bleed valves can be incorporated into the foam filled bladder of the self inflating device and which open when the internal pressure of the foam filled bladder is lower than a set pressure as a result of the seat becoming unoccupied.

Electrical bleed valves may be fitted in situ to the foam filled bladder of the self-inflating device BUT are more likely to be connected to the foam filled bladder of the self-inflating device by a flexible tube and operated by a remote switching device.

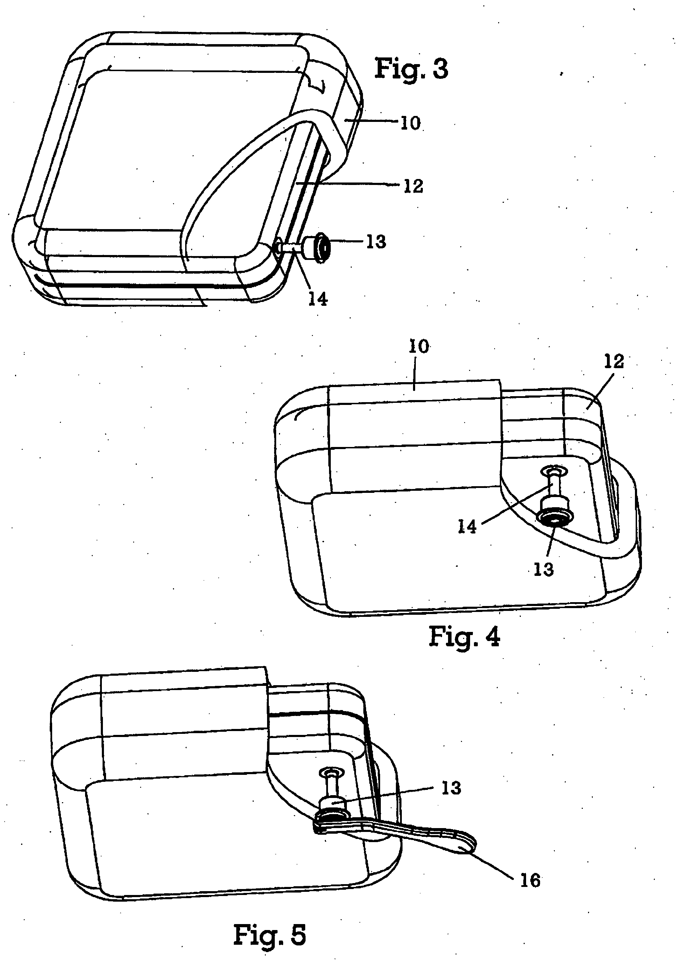

Figs 3 to 15 depict various embodiments of the invention that incorporate some of the above control mechanisms in more detail. Whilst they have not depicted the features of the chair that make them reclinable, the person skilled in the art would be familiar with most common types of reclining mechanisms for incorporation into the a chair of the present invention.

The seat bottom 10 shown in Fig 3 consists of a shell of injection moulded or cut foam 11 which contains an envelope 12 containing open celled, self inflating foam material (not shown). Flow of air into and out of the self inflating foam 12 is controlled by control valve 13 having a stem 14. In this instance, the stem 14 extends in the same general plane as that of the seat bottom 10.

The second embodiment of the invention show in Fig 4 is substantially similar to that shown in Fig 3 except that the valve stem 14 projects downwardly from the underside 15 of the seat bottom 10.

The third embodiment of the invention shown in Fig 5 is substantially similar to the embodiment of Fig 4 except that the control valve 13 is operated by a lever 16.

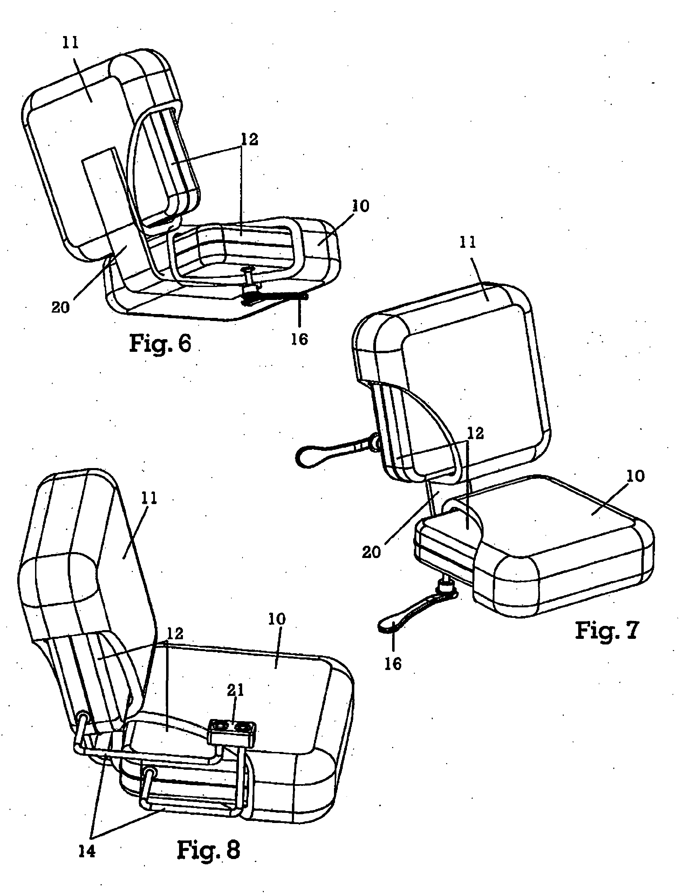

The fourth embodiment of the invention shown in Fig 6 incorporates seat back 11 and seat bottom 10 which are mounted on a bracket 20 so as to constitute a chair.

The fifth embodiment of the invention shown in Fig 7 is an enhancement of that shown in Fig 6 in that a second inflatable device is incorporated into the chair back 11 and a control valve 13 is provided with a level 16 to control the inflation of the device.

The invention provides remote control valves 21. The remote control valves 21 are connected to the bladders 12 by extended stems or tubes 14.

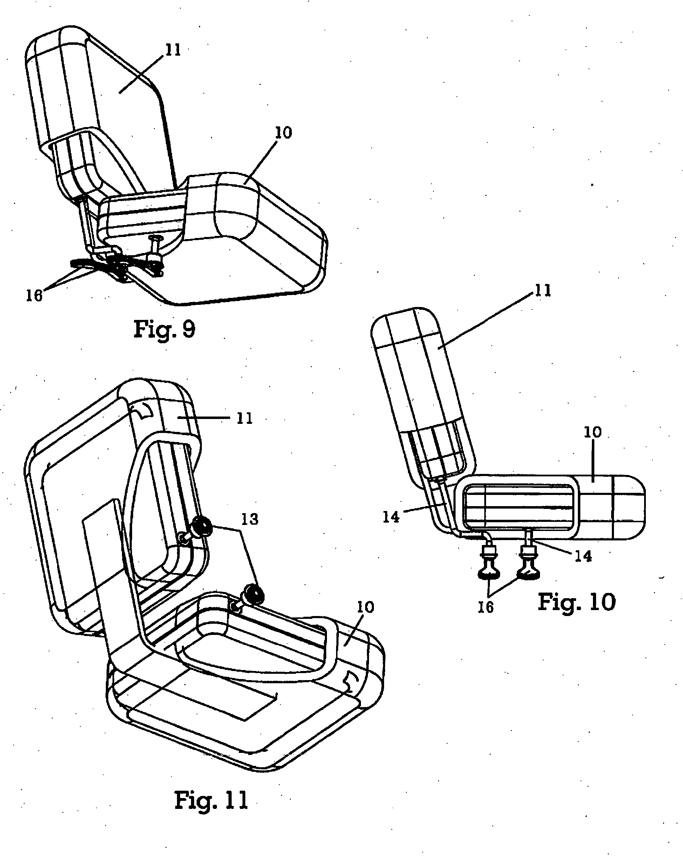

In the seventh embodiment of the invention shown in Figs 9 and 10, the control valves for both the seat bottom 10 and seat back 11 are operated by levers 16 beneath the seat bottom 10.

In the eighth embodiment of the invention shown in Fig 11 a chair is provided with seat back 11 and seat bottom 10 with inflatable devices controlled by two manual control valves that extend out the sides of the seat back 11 and seat bottom 10.

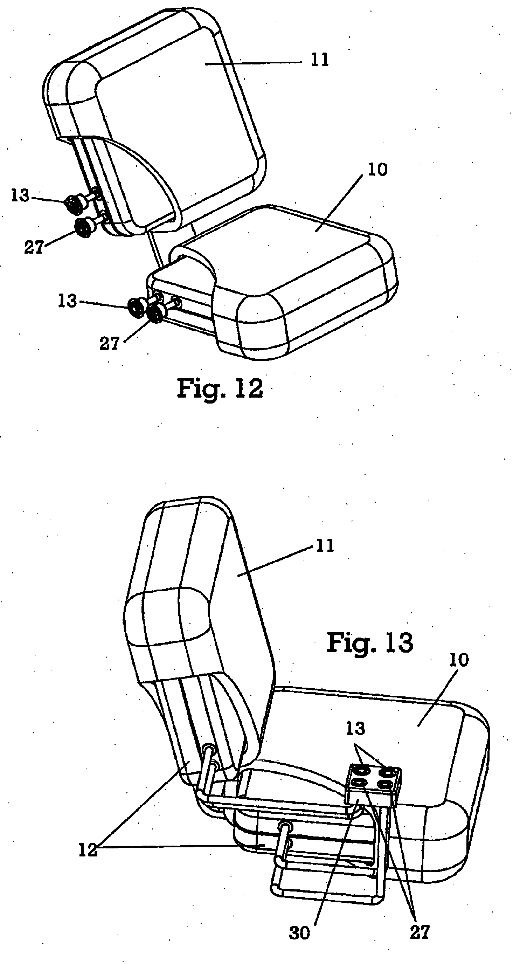

The ninth embodiment of the invention shown in Fig 12 is substantially similar to that shown in the earlier figures except that the seat bottom 10 and the seat back 11 each have associated with their incorporated devices 12 control valves 13 and further, bleed valves 27.

In the tenth embodiment of the invention shown in Fig 13, a control panel 30 incorporates the control valves 13 and the bleed valves 27 for the seat bottom 10 and the back rest 11. Extended stems 14 connect the control panel 30 to the seat bottom 10 and back rest 11.

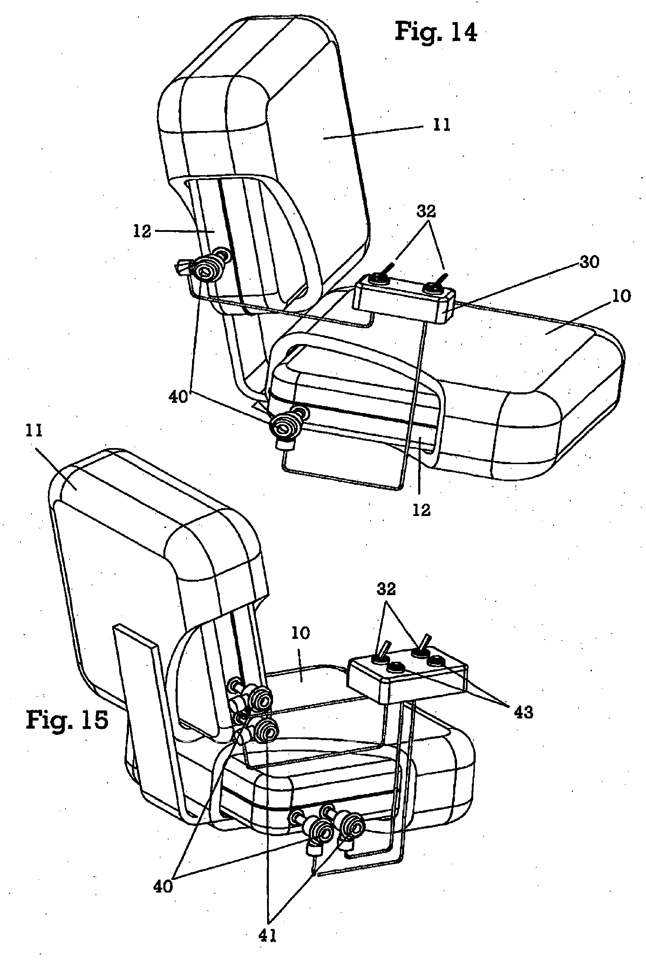

In the eleventh embodiment of the invention shown in Fig 14, electrical control valves 40 control the ingress and egress of air into the devices 12 and are electrically operated by control switches 32 on the control panel 30.

The twelfth embodiment of the invention shown in Fig 15 incorporates electrical control valves 40 and electrical bleed valves 41 which are operated by respective control switches 32 and 43.

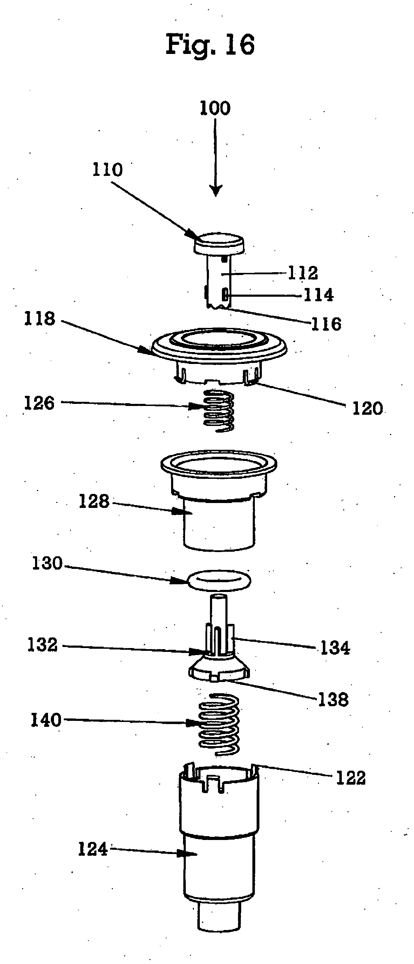

The exploded mechanical control valve 100 shown in Fig. 16 includes button 110, connected to button shaft 112 which has three outwardly directed short keys 114 and serrated lower end 116. The button moves within snap ring 118 which has clips 120 for attaching it to the top valve cylinder 128. Button spring 126 which is positioned between the underside of the button 110 and the top of the internal part of top valve cylinder 128 urges the button upwards.

Mechanical control valve 100 further includes valve spring 140, O ring 130 and valve stem 132, which has three equally spaced keys 134 the tops of which are bevelled at 45 degrees. The central shaft of the valve stem 132 slides inside the button shaft 112 until keys 134 abut the serrated lower end 116 and the keys slide into the three long keyways (not shown) in the inner surface of the top valve cylinder 128. The lower end of the valve stem 132 is conically shaped 136, with air ports 138 to allow the air to enter and exit the mechanical control valve 100.

In use, when the button 110 is slightly depressed the button spring 126 becomes compressed and the button shaft 116 extends down along the shallow keyways (not shown) featured on the inside surface of top valve cylinder 128, and pushes the valve stem 132 against the valve spring 140 and away from the O ring. This action has the effect of opening the valve 100, however, it is not locked into any position and will return to the closed state when the pressure is removed from the button 110.

If the button 110 is fully depressed, the keys 134 on the valve stem are pushed clear of the deep keyways featured on the inner surface of top valve cylinder 128 whereupon the serrations 116 on the lower end of the button shaft 112 press against the bevelled ends of the keys 134 on the valve stem 132 and, by forcing them into the bottom of the serrations 116, cause the valve stem 132 to partially rotate, and when the button 110 is released from being fully depressed, the valve spring 140 pushes against the valve stem 132 which is further rotated as the bevelled ends of the keys 134 engage cam ratchets on the inside of the cylindrical surface of the top valve cylinder 128, and where the valve stem 132 rotates to a position where the keys 134 on the valve stem 132 are aligned with the shallow keyways (not shown) of the top valve cylinder whereupon the mechanical control valve 100 is held fully open position.

When the next time the button is fully depressed, the serrations 116 on the lower end of the button shaft 112 press against the bevelled ends of the keys 134 on the valve stem 132 and, by forcing them into the bottom of the serrations 116, cause the valve stem to partially rotate, and wherein when the button is released, the valve spring 140 pushes against the valve stem 132 which is further rotated as the bevelled ends of the keys 134 engage the cam ratchet on the inside of the top valve cylinder's surface, and where the valve stem 132 is then rotated to a position where the keys 134 of the valve stem 132 are aligned with the deep keyways (not shown) in the top valve cylinder 128, and which then slot into the deep keyways of the top valve cylinder 128 and the valve stem 132 is pressed against the O ring 130 where the mechanical control valve 100 is maintained in a closed position.

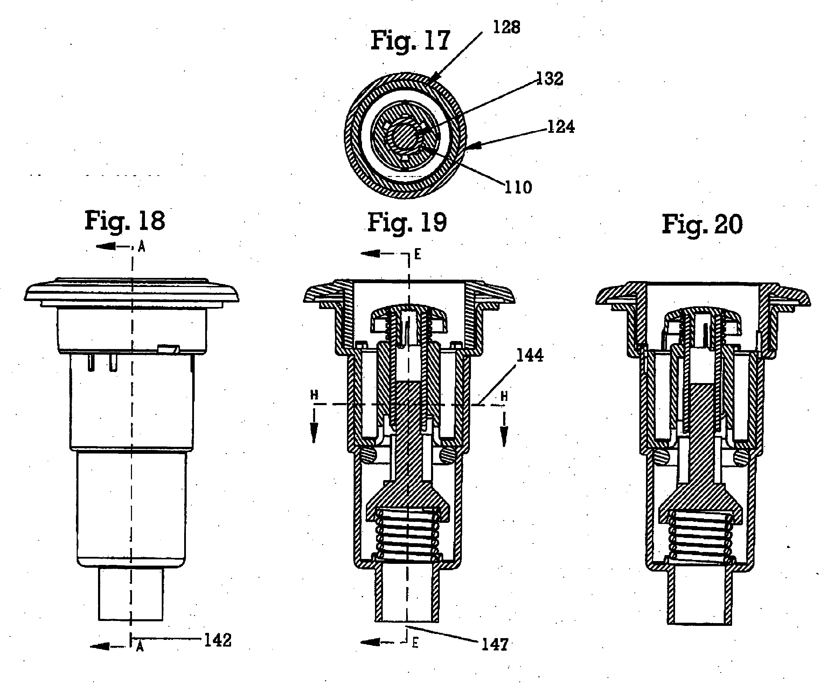

Figs 17 through 20 all show mechanical control valve 100 in an open state with the button 110 depressed. Fig 17 depicts a top sectional view of mechanical control valve 100 along axis H-H 144 of Fig 19, in which bottom valve cylinder 124, top valve cylinder 128, button shaft 112 and valve stem 132 can be seen. Fig 18 depicts mechanical control valve 100 in side view in which vertical axis A-A 142 is depicted. In Fig 19 the mechanical control valve 100 is shown in cross section taken along axis A-A 142 of mechanical control valve 100 shown in Fig 18. Fig 19 also depicts axis E-E 147 and H-H 144. Fig 20 depicts mechanical control valve 100 in cross section along axis E-E 144 as depicted in Fig 19.

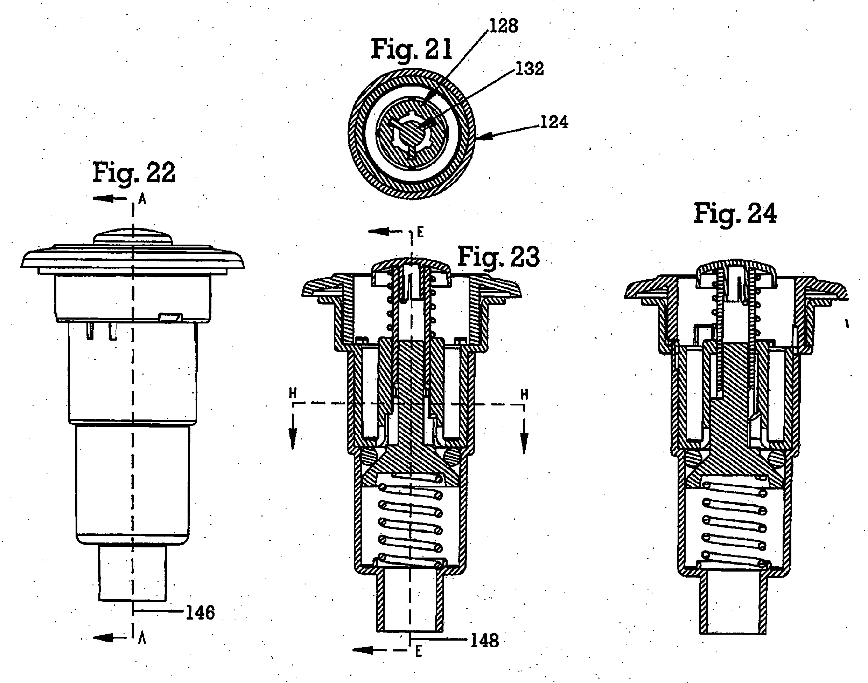

Figs 21 through 24 all show mechanical control valve 100 in a closed state with button 110 released. Fig 21 is a top sectional view taken along axis H-H of Fig 23. In this figure bottom valve cylinder 124, valve stem 132, and top valve cylinder 128 are shown. Fig 22 shows the mechanical control valve 100 in side view with axis A-A 146 depicted. Fig 61 shows the mechanical control valve 100 in cross section along the axis A-A of Fig 60, and also shows axis E-E 148. Fig 62 shows mechanical control valve 100 along axis E-E 148 as depicted in Fig 61.

The mechanical control valve 100 is assembled according to the following method: Insert the button shaft 112 into the top valve cylinder 128 with the serrated end 116 of the button shaft 112 pointing down. Ensure keys 114 on the button shaft 112 fit into the shallow keyways in the top valve cylinder 128. Push the button shaft 112 to the full extent of the shallow keyways. Place the button spring 126 over the top end of the button shaft 112. Align the two clasps on the button 110 with the recesses on the button shaft 112 and snap into place. Place the O ring 130 over the central shaft of the valve stem 132. Insert the central shaft of the valve stem 132 into the inside of the button shaft 112 from the lower end of the top valve cylinder 128. Ensure the keys 134 on the central shaft of the valve stem 132 are located in the deep keyways of the top valve cylinder 128. Ensure the valve stem 132 grips the O ring 130 between it and the bottom end of the top valve cylinder 128. Place the valve spring 140 in the housing at the lower end of the valve stem 132. Slide the bottom valve cylinder 124 over the valve spring 140; the valve stem 132; the O ring 130; and the inverted top valve cylinder 128. Align the clasps 122 on the bottom valve cylinder 124 with the recesses on the top valve cylinder 128 and snap into place. The snap ring 118 is not fitted until the valve 100 has been fitted to the seat and the seat is upholstered.

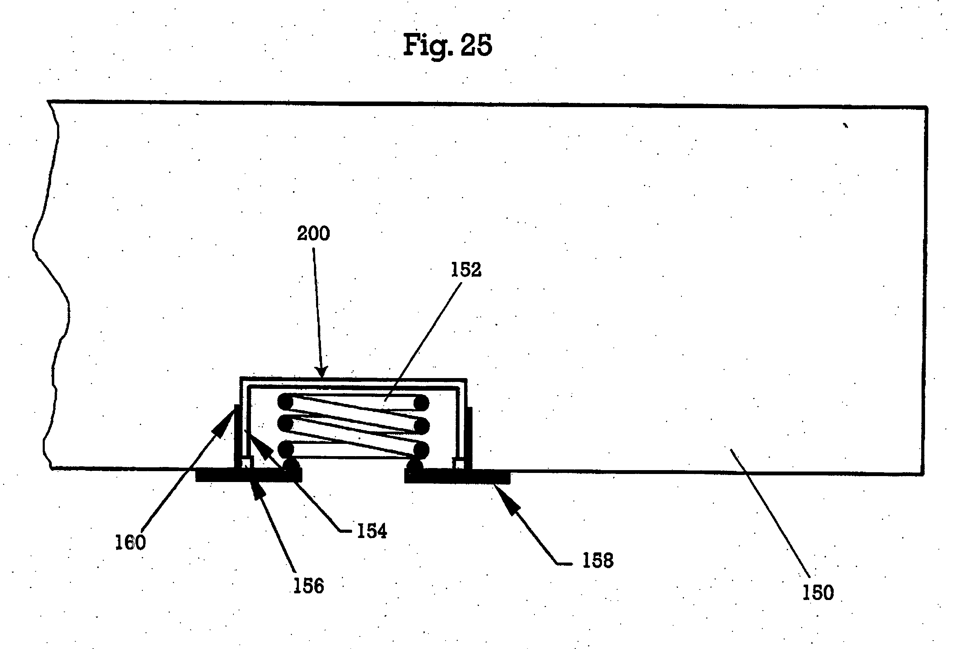

Fig 25 shows a seat bottom 150 with integrated automatic mechanical bleed valve 200. When there is no pressure on the seat bottom 150 the valve spring 152 gently pushes the inner valve case 154 up thereby opening slightly the seal 156 formed between the flange 158 and the seal 156 which allows air to pass into the self-inflating device via the air ports in the outer valve case 160. Alternatively when there is pressure on the cushion 150 the internal pressure on the inner valve case 154 causes it to compress the valve spring 152 and close the seal 156 whereupon air is prevented from leaving or entering the cushion 150.

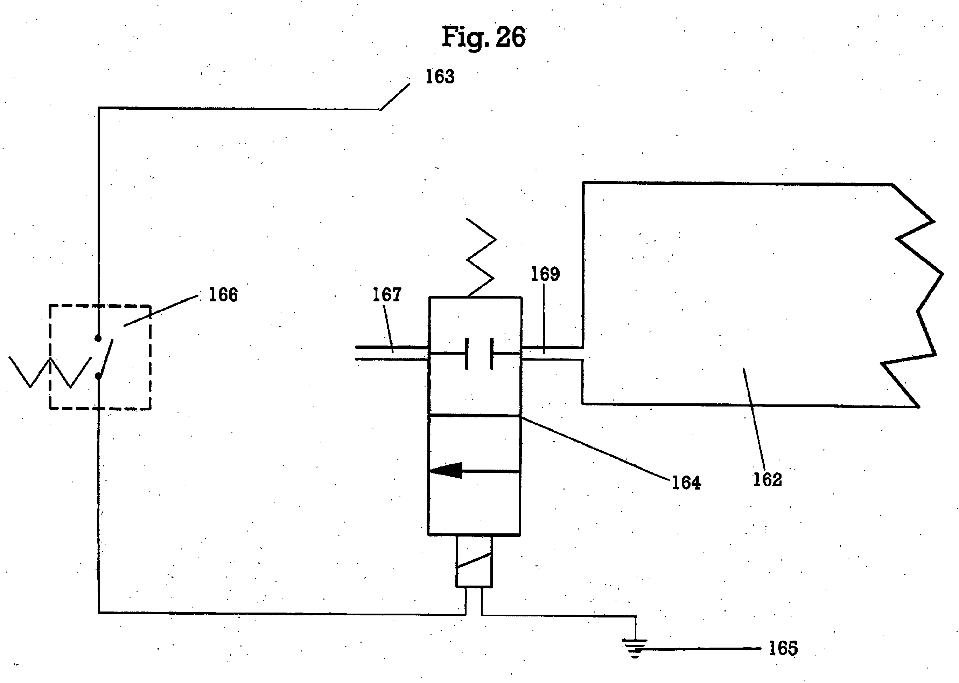

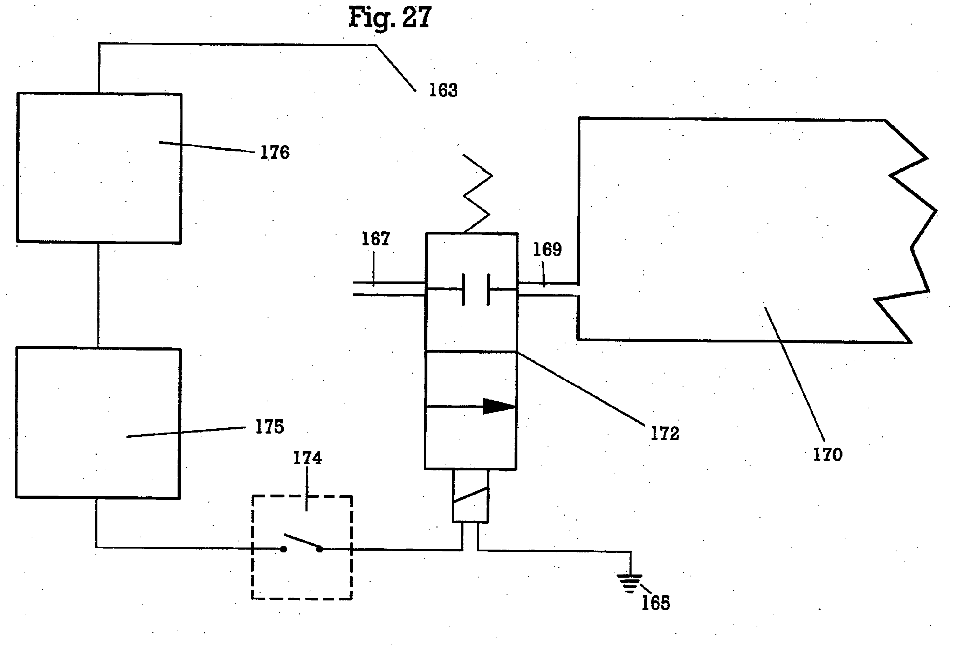

Figs 26 and 27 depict embodiments of the invention as they specifically apply to some forms of vehicle seats including car seats. It is a feature of the invention that a number of electrically operated solenoid valves (such as the solenoid valves marketed by SMC Pneumatics (Australia) Pty Ltd as VDW21-6G-2-01) be operably connected to electrical switches and the vehicle's central locking system.

Fig 26 depicts the electrical control aspect of a vehicle's pressure control system. The figure depicts a self-inflating device 162 of a seat back or seat bottom, electric control valve 164, and pressure control switch 166. The circuit is connected to a source of power 163 and is earthed at 165. Electric control valve 164 controls the ingresss and egress of air via the ports connected to the atmosphere 167 or to the self inflating device 169. In use, the occupant of the vehicle seat operates the switch 166 such that the electric control valve 164 is partially opened when the pressure control switch 166 is momentarily closed, and fully opened when the pressure control switch 166 is operated and held in the closed position, and fully closed when the pressure control switch 166 is in the open (relaxed) position.

Fig 27 depicts the electrical bleed aspect of a vehicle's reinflation system. In this figure self inflating device 170 contained within a seat back 11 or seat bottom 10, electric bleed valve 172, override switch 174, time delay relay 175 and central locking system 176 are depicted. In operation when the driver or other occupant exits the vehicle and locks the vehicle using the central locking system 176 this causes the time delay relay unit 175 to provide power to the electric bleed valve 172 for a predetermined amount of time. During this time the electric bleed valve 172 remains in an open position, and as there is no person seated on the seat, the self inflatable device within the cushion expands to its fully expanded state. After the predetermined period of time expires, the time delay relay unit 175 cuts power to the electric bleed valve 172 such that the valve closes and air is thereafter not permitted to escape from the self-inflated device formed within the cushion 170. In this way, when the driver or other occupant returns to the vehicle the seat containing the cushion 170 is fully inflated and thereafter is adjusted using the pressure control switch 166 of Fig 26 to allow some air to escape so as to mould the seat bottom to the occupant's buttocks. In the event that the vehicle is locked using the central locking system 176 and the driver does not wish to have the seat re-inflate, the override switch 174 can be operated to prevent the electric solenoid valve 172 from being opened under the control of the time delay relay 175.

Foam filled bladders in self-inflating devices comprise polyurethane foam of a grade suitable for the purpose, encased in an inflatable grade PVC or alternative material that may be welded, with a port for the ingress and egress of air. The grade of polyurethane foam is likely to be: Seat bottom -N31-190 or HR32-130, and seat back rest-N23-130. Self inflating devices (seat bladders) may be made to dimensions that are suitable for the chair in which they are intended for use. Foam filled bladders in self inflating devices will be incorporated in seating systems in conjunction with injection moulded foam seat bottom and back rests, cut foam seat and back rest cushions.

The seat bottoms and seat back incorporating self inflating devices can be manufactured in a number of ways. With respect to seat bottoms they can be created by first determining the size and shape of the bladder of the self inflating device and making a mould insert of a suitable material of the same size and shape of the bladder. This mould insert is then inserted into the lid of the injection moulded foam mould for the seat bottom foam cushion and substrate injected in to form a seat cushion that has a cavity accessible from the underside of the seat cushion and which is formed in the shape and size of the foam filled bladder. The foam filled bladder is then fitted into the cavity with a port in the foam filled bladder positioned to corresponds to a hole bored into the side of the injection moulded foam seat cushion. Whereupon the control valve is connected to the port in the foam filled bladder through the hole and where the assembled components are then upholstered into a seat bottom.

Alternatively, a seat bottom containing a self inflating device can be manufactured by first sticking a foam filled bladder to a plywood section which forms the base of the seat bottom and then applying foam cut to size around the foam filled bladder, covering the top side of the foam filled bladder and its foam surround with a further layer of foam approximately 10mm in thickness and upholstering the seat bottom. Seat backs incorporating self inflating devices can be formed in substantially the same manner.

## Claims

1. A reclinable chair comprising a seat bottom (10) and seat back rest (11), the seat bottom and seat back rest each incorporating at least one self-inflating device which further comprise:
an envelope (12) defining a closed space,
a compressible material contained within the envelope, and
valve means (13) adapted to allow air into the envelope so that the compressible material can expand to enlarge the self-inflating device and to allow air out of the envelope so that the material may be compressed and the self-inflating device reduced in size,
the valve means (13) comprises a control valve (13) for controlling the degree of compression of the at least one self-inflating device and wherein the control valve further comprises a valve stem (132) and a valve seat (130) formed in the valve body and adapted to form a valve seal therebetween when the control valve is closed, an actuator (16) which whilst actuated separates the valve stem (132) and valve seat (130) to permit air flow into and out of the air channels formed in the valve body for adjustment of the volume of air within the device and locking means for maintaining the control valve (13) fully open when it is desired to fill the device with air or empty it of air,
wherein the control valve (13) is controlled by a single controller so that the chair has at least two self-inflatable devices each with its own single controller to control the inflation and deflation of each self-inflatable device, wherein the single controllers are collocated adjacently as remote control valves (21) to facilitate easy access and control of the at least two self-inflatable devices, and
the reclinable chair is configured so that the occupant of the reclinable chair is able to adjust the recline of the seat back rest and the degree of compression of the self-inflating device of the seat bottom and seat back rest by operating the at least two single controllers to:
hold the buttocks in place,
provide individual pelvic support and,
tilt the pelvis forward so that the spine is lengthened in a gentle S-shape.

2. The chair of claim 1 wherein when the valve seal of the control valve (13) is partially opened when a button (110) is partially depressed, locked into an open position when the button (110) is fully depressed, and when the valve seal of the control valve (13) is locked into an open position and the button (110) fully depressed, locks the valve seal and thereby the control valve (13) in a closed position.

3. The chair of claim 1 wherein when the valve seal of the control valve (13) is partially opened when a lever of the actuator (16) is partially raised, locked into an open position when the lever (16) is fully raised, and when the valve seal is locked into an open position and the lever fully raised, locks the valve seal in a closed position.

4. The chair of claim 1 wherein the valve means includes a bleed valve (27) adapted to bleed air into the envelope such that when the chair incorporating the at least one inflatable device is not in use, the envelope (12) returns to a fully inflated state.

5. The chair of claim 4 wherein the valve means comprises separate bleed valves (27) and control valves (13) for each self-inflating device.

6. The chair of claim 4 or 5 wherein the bleed valve (27) is a mechanical bleed valve operated manually by a single controller or automatically controlled by pressure differences resulting from the seat becoming unoccupied.

7. The chair of claim 4 or 5 wherein the bleed valve is an electric bleed valve (172) further comprising a solenoid valve and switching means (174, 176) comprising a user operable switch and a relay system which operates automatically to open the solenoid valve for a predetermined time.

## Patentansprüche

1. Neigungsverstellbarer Stuhl mit einer Sitzfläche (10) und einer Rückenlehne (11), wobei sowohl die Sitzfläche als auch die Rückenlehne wenigstens eine selbstaufblasende Einrichtung enthalten, die weiter aufweist:
- eine Hülle (12), die einen geschlossenen Raum umgrenzt,
- ein kompressibles Material, das in der Hülle enthalten ist, und
- Ventilmittel (13), die eingerichtet sind, Luft in die Hülle einzulassen, sodass sich das kompressible Material ausdehnen kann, um die selbstaufblasende Einrichtung zu vergrößern, und um Luft aus der Hülle herauszulassen, damit das Material komprimiert und die selbstaufblasende Einrichtung in ihrer Größe reduziert werden kann,
wobei die Ventilmittel (13) ein Steuerventil (13) zum Steuern des Kompressionsgrads der wenigstens einen selbstaufblasenden Einrichtung aufweisen und wobei das Steuerventil weiter einen Ventilschaft (132) und einen im Ventilkörper gebildeten Ventilsitz (130) aufweist und eingerichtet ist, eine Ventildichtung zwischen diesen auszubilden, wenn das Steuerventil geschlossen ist, einen Aktor (16) der, solange aktiviert, den Ventilschaft (132) und den Ventilsitz (130) voneinander trennt, um einen Luftstrom in und aus den Luftkanälen, die im Ventilkörper gebildet sind, zu erlauben, um das Steuerventil (13) vollständig geöffnet zu halten, wenn es gewünscht ist, die Einrichtung mit Luft zu befüllen oder von Luft zu befreien,
wobei das Steuerventil (13) durch eine einzelne Steuerung gesteuert werden kann, sodass der Stuhl wenigstens zwei selbstaufblasende Einrichtungen hat, jede mit ihrer eigenen Steuerung zum Steuern der Befüllung und Entleerung jeder selbstaufblasenden Einrichtung, wobei die einzelnen Steuerungen als Fernsteuerungsventile (21) benachbart angeordnet sind, um einen einfachen Zugriff und eine einfache Steuerung der wenigstens zwei selbstaufblasenden Einrichtungen zu ermöglichen, und
der neigungsverstellbare Stuhl so eingerichtet ist, dass der Benutzer des neigungsverstellbaren Stuhls die Neigung der Rückenlehne und den Kompressionsgrad der selbstaufblasenden Einrichtung der Sitzfläche und der Rückenlehne einstellen kann durch Bedienen der wenigstens zwei einzelnen Steuerungen zum
- Halten des Gesäßes in Position,
- individuellen Unterstützen des Beckens und
- Vorwärtskippen des Beckens, sodass das Rückgrat in einer sanften S-Form gelängt wird.

2. Stuhl nach Anspruch 1, wobei, wenn die Ventildichtung des Steuerventils (13) partiell geöffnet ist, wenn ein Knopf (110) partiell gedrückt ist, dieses in einer offenen Position arretiert wird, wenn der Knopf (110) vollständig gedrückt wird, und wenn der Ventilsitz des Steuerventils (13) in einer offenen Position arretiert und der Knopf (110) vollständig gedrückt wird, dieser die Ventildichtung und dadurch das Steuerventil (13) in einer geschlossenen Position arretiert.

3. Stuhl nach Anspruch 1, wobei, wenn die Ventildichtung des Steuerventils (13) partiell geöffnet ist, wenn ein Hebel (16) des Aktors teilweise angehoben ist, dieses in einer geöffneten Position arretiert wird, wenn der Hebel (16) vollständig angehoben wird, und wenn die Ventildichtung in einer offenen Position arretiert und der Hebel vollständig angehoben ist, dieser die Ventildichtung in einer geschlossenen Position arretiert.

4. Stuhl nach Anspruch 1, wobei die Ventilmittel ein Entlüftungsventil aufweisen, das eingerichtet ist, Luft in die Hülle einzuströmen, sodass, wenn der die wenigstens eine selbstaufblasende Einrichtung aufnehmende Stuhl nicht in Benutzung ist, die Hülle (12) zu einem vollständig aufgeblasenen Zustand zurückkehrt.

5. Stuhl nach Anspruch 4, wobei die Ventilmittel separate Entlüftungsventile (27) und Steuerventile (13) für jede selbstaufblasende Einrichtung aufweisen.

6. Stuhl nach Anspruch 4 oder 5, wobei das Entlüftungsventil (27) ein mechanisches Entlüftungsventil ist, das durch eine einzelne Steuerung manuell bedient oder durch Druckdifferenzen automatisch gesteuert ist, die daraus resultieren, dass der Sitz freigegeben wird.

7. Stuhl nach Anspruch 4 oder 5, wobei das Entlüftungsventil ein elektrisches Entlüftungsventil (172) ist, das weiter ein Magnetventil und Schaltmittel (174, 176), einschließlich eines durch einen Benutzer bedienbaren Schalters und eines Relaysystems, das automatisch das Öffnen des Magnetventils für eine vorbestimmte Zeit betreibt, aufweist.

## Revendications

1. Chaise inclinable comprenant une base de siège (10) et un appui de siège pour le dos (11), au moins un dispositif autogonflant étant incorporé dans respectivement la base de siège et l'appui de siège pour le dos, qui comprend en outre :
une enveloppe (12) définissant un espace clos ;
une matière compressible contenue au sein de l'enveloppe ; et
un moyen faisant office de soupape (13) conçu pour permettre à de l'air de pénétrer dans l'enveloppe, de telle sorte que la matière compressible peut s'élargir pour agrandir le dispositif autogonflant, et pour permettre à de l'air de s'évacuer de l'enveloppe de façon à pouvoir comprimer la matière et à réduire la dimension du dispositif autogonflant,
le moyen faisant office de soupape (13) comprenant une soupape de réglage (13) pour régler le degré de compression dudit au moins un dispositif autogonflant et dans laquelle la soupape de réglage comprend en outre une tige de soupape (132) et un siège de soupape (130) réalisé dans le corps de soupape et conçu pour former un joint d'étanchéité de la soupape entre eux lorsque la soupape de réglage est fermée, un actionneur (16) qui, lorsqu'il est activé, sépare la tige de soupape (132) et le siège de soupape (130) pour permettre un écoulement d'air dans et hors des canaux pour l'air réalisés dans le corps de soupape pour ajuster le volume d'air au sein du dispositif, et un moyen de verrouillage pour maintenir la soupape de réglage (13) complètement ouverte lorsqu'on souhaite remplir le dispositif avec de l'air ou en évacuer l'air ;
dans laquelle la soupape de réglage (13) est commandée par un contrôleur unique, si bien que la chaise possède au moins deux dispositifs autogonflants, chacun avec son propre contrôleur unique pour commander le gonflage et le dégonflage de chaque dispositif autogonflant, dans laquelle les contrôleurs uniques sont disposés de manière conjointe en position adjacente sous la forme de soupapes de commande (21) pour faciliter une commande et un accès aisés desdits au moins deux dispositifs autogonflants, et la chaise inclinable et configurée de telle sorte que l'occupant de la chaise inclinable est capable de régler l'inclinaison de l'appui du siège pour le dos ainsi que le degré de compression du dispositif autogonflant de la base du siège et de l'appui du siège pour le dos en actionnant lesdits au moins deux contrôleurs uniques pour :
maintenir les fesses en place ;
procurer un support pelvien individuel ; et
incliner le pelvis vers l'avant de telle sorte que la colonne vertébrale est allongée en prenant légèrement la forme d'un S.

2. Chaise selon la revendication 1, dans laquelle le joint d'étanchéité de la soupape de réglage (13) est ouvert en partie lorsqu'un bouton (110) est enfoncé en partie, est verrouillé dans une position ouverte lorsque le bouton (110) est enfoncé complètement et, lorsque le joint d'étanchéité de la soupape de réglage (13) est verrouillé dans une position ouverte, le bouton (110) est complètement enfoncé, le joint d'étanchéité de la soupape est verrouillé, si bien que la soupape de réglage (13) se trouve dans une position fermée.

3. Chaise selon la revendication 1, dans laquelle le joint d'étanchéité de la soupape de réglage (13) est ouvert en partie lorsqu'un levier de l'actionneur (16) est partiellement relevé, est verrouillé dans une position ouverte lorsque le levier (16) est complètement relevé, et lorsque le joint d'étanchéité de la soupape est verrouillé dans une position ouverte et le levier est complètement relevé, le joint d'étanchéité de la soupape est verrouillé dans une position fermée.

4. Chaise selon la revendication 1, dans laquelle le moyen faisant office de soupape englobe une soupape de purge (27) conçu pour purger l'air dans l'enveloppe de telle sorte que, lorsque la chaise dans laquelle est incorporé ledit au moins un dispositif gonflable n'est pas utilisée, l'enveloppe (12) reprend un état complètement gonflé.

5. Chaise selon la revendication 4, dans laquelle le moyen faisant office de soupape comprend des soupapes de purge (27) et des soupapes de réglage (13) séparées pour chaque dispositif autogonflant.

6. Chaise selon la revendication 4 ou 5 dans laquelle la soupape de purge (27) est une soupape de purge mécanique actionnée à la main par un contrôleur unique ou commandée de manière automatique par des différences de pression résultant du fait que le siège devient inoccupé.

7. Chaise selon la revendication 4 ou 5 dans laquelle la soupape de purge est une soupape de purge électrique (172) comprenant en outre une soupape à solénoïde et un moyen faisant office d'interrupteur (174, 176) comprenant un interrupteur qui peut être actionné par un utilisateur et un système de relais qui travaille de manière automatique pour ouvrir la soupape à solénoïde pendant un laps de temps prédéterminé.
